# EUROPEAN PATENT APPLICATION

(11) **EP 4 850 929 A1**
(43) Date of publication of application: **09.12.2026**
(21) Application number: 26183141.6
(22) Date of filing: 04.06.2026
(51) Int. Cl.: B60C 7/24, B60C 7/14, B60C 11/00

(54) **A TIRE AND A METHOD OF MAKING THEREOF**

(30) Priority: 05.06.2025 US 202563818121 P
(71) Applicant: Garant GP, Saint-François-de-la-Rivière-du-Sud, QC G0R 3A0 (CA)
(72) Inventor: BERROUARD, Mathieu, Lévis, G6X 3G5 (CA); BOIES, David, Lévis, G7A 3A3 (CA)
(74) Representative: Cabinet Boettcher

(57) **Abstract**

A wheel assembly comprising a tire in an elastic material and a rigid hub, he tire comprises an outer wall, an inner wall, and a plurality of spokes between the inner wall and the outer wall; a plurality of first ribs extending from at least one of : an outer surface of the inner wall on at least part of a width of the outer surface of the inner wall; and on an outer surface of the hub on at least part of a width of the outer surface of the hub.

## Description

### FIELD OF THE INVENTION

The present invention relates to tires. More specifically, the present invention is concerned with a tire and a method of fabrication thereof.

### BACKGROUND OF THE INVENTION

On soft grounds, such as in sand, snow, earth, or mud for example, the traction capacity of tires decreases; they may provide insufficient ground surface area. Pneumatic tires may deflate and need to be inflated occasionally or even get punctured and then be changed or repaired, when the pressure of the tires is too low, the tire may come off the rim, especially if hitting an obstacle.

Tracks, on the other hand, may prove less maneuverable; tracks being typically heavier than tires, they may also limit the speed of the tool fitted with them. Moreover, they generally involve high costs, including maintenance costs.

There is still a need in the art for a tire and a method of fabrication thereof.

### SUMMARY OF THE INVENTION

More specifically, in accordance with the present invention, there is provided a tire comprising an outer wall, an inner wall, and a plurality of spokes between the inner wall and the outer wall; the tire being mounted on a generally cylindrical rigid hub, a plurality of first ribs extending from at least one of : an outer surface of the inner wall on at least part of a width of the outer surface of the inner wall; and on an outer surface of the hub and extending on at least part of a width of the outer surface of the hub

There is further provided a wheel assembly comprising a tire in an elastic material and a rigid hub, wherein the tire comprises an outer wall, an inner wall, and a plurality of spokes between the inner wall and the outer wall; a plurality of first ribs extending from at least one of : an outer surface of the inner wall on at least part of a width of the outer surface of the inner wall; and on an outer surface of the hub on at least part of a width of the outer surface of the hub.

Other objects, advantages and features of the present invention will become more apparent upon reading of the following non-restrictive description of specific embodiments thereof, given by way of example only with reference to the accompanying drawings.

### BRIEF DESCRIPTION OF THE DRAWINGS

In the appended drawings:
FIG. 1 is a perspective front view of a wheeled tool according to an embodiment of an aspect of the present disclosure;
FIG. 2 is a side view of a tire and a hub according to an embodiment of an aspect of the present disclosure;
FIG. 3 shows the tire of FIG. 2;
FIG. 4A shows a tire according to an embodiment of an aspect of the present disclosure;
FIG. 4B shows details of FIG. 4A according to an embodiment of an aspect of the present disclosure;
FIG. 5 is a side view of a tire according to an embodiment of an aspect of the present disclosure;
FIG. 6 shows details of FIG. 5;
FIG. 7 shows the tire of FIG. 5 mounted on a hub according to an embodiment of an aspect of the present disclosure;
FIG. 8A shows the hub of FIG. 7, with the tire of FIG. 7 shown in transparency;
FIG. 8B shows the tire and hub of FIG. 8B mounted on a vehicle; according to an embodiment of an aspect of the present disclosure;
FIG. 9 shows the hub of FIG. 8;
FIG. 10A is a front perspective view of the hub of FIG. 9;
FIG. 10B is a section view of a hub and a tire according to an embodiment of an aspect of the present disclosure;
FIG. 11 is a side perspective view of the tire of FIG. 5 mounted on a hub according to an embodiment of an aspect of the present disclosure;

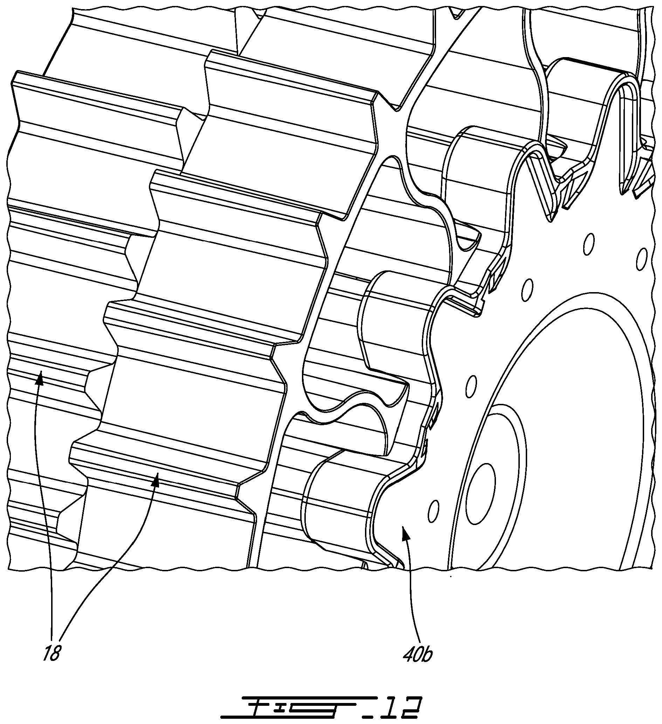

FIG 12 shows details of FIG. 11;
FIG. 13 is a side perspective view of a tire with a hub according to an embodiment of an aspect of the present disclosure;
FIG. 14 is a side perspective view of the tire of FIG. 5 mounted on a hub according to an embodiment of an aspect of the present disclosure;
FIG. 15 shows a stopper according to an embodiment of an aspect of the present disclosure;
FIG. 16 shows a stopper according to an embodiment of an aspect of the present disclosure; and
FIG. 17 shows a stopper according to an embodiment of an aspect of the present disclosure.

### DESCRIPTION OF ILLUSTRATIVE EMBODIMENTS

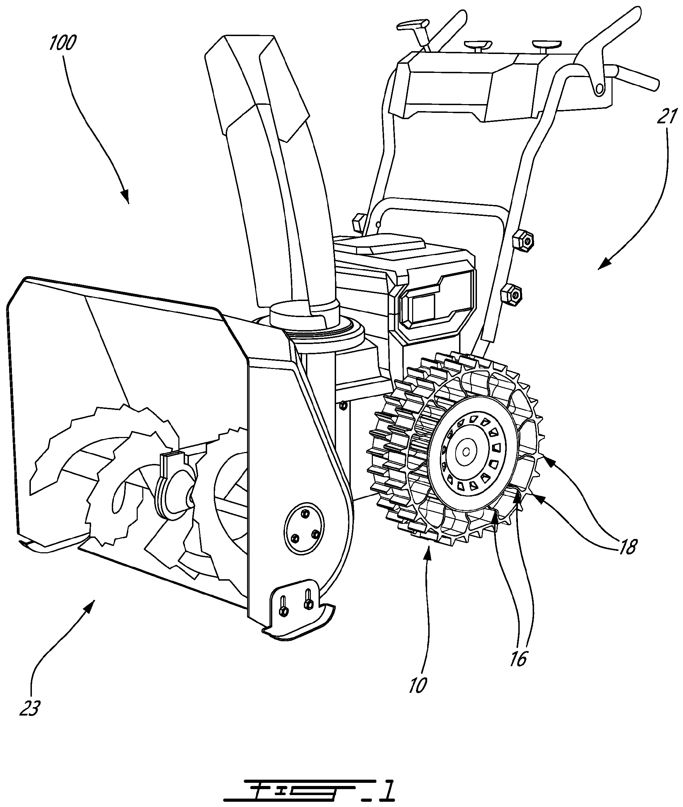

The present invention is illustrated in further details by the following non-limiting examples in relation to a tool such as a snowblower 100 as shown FIG. 1.

A snowblower is illustrated for example purpose only; other wheeled tools may be contemplated, such as for example wheelbarrows, carts, all-terrain vehicles, lawnmowers, all-terrain strollers; all-terrain wheelchairs, go-karts or recreational vehicles or vehicles for snow and/or mountain or rescue. Views will be referred to standing facing the front 23 of the wheeled tool, opposite the rear 21 of the wheeled tool 100.

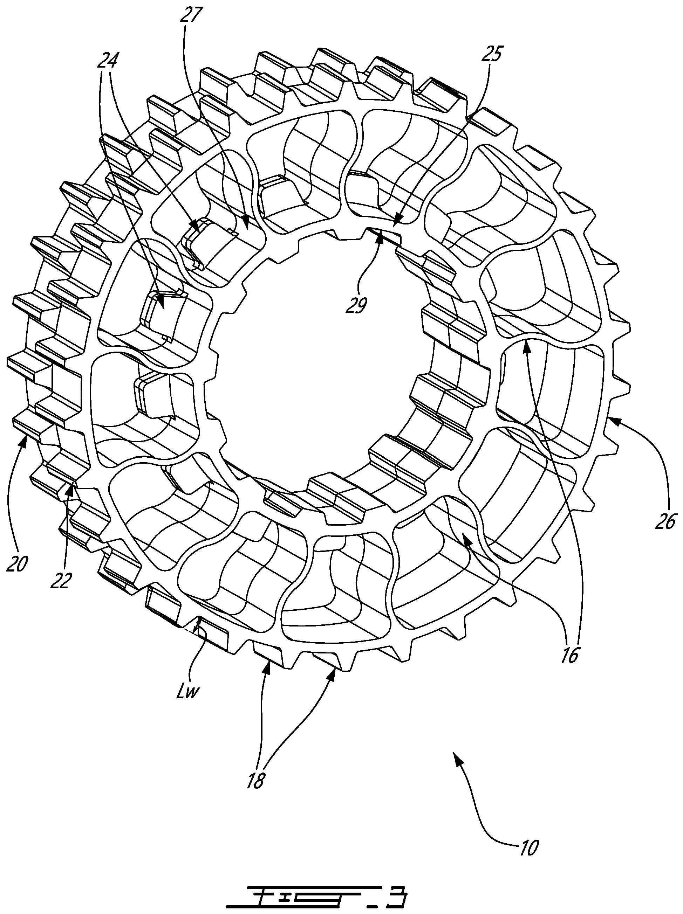

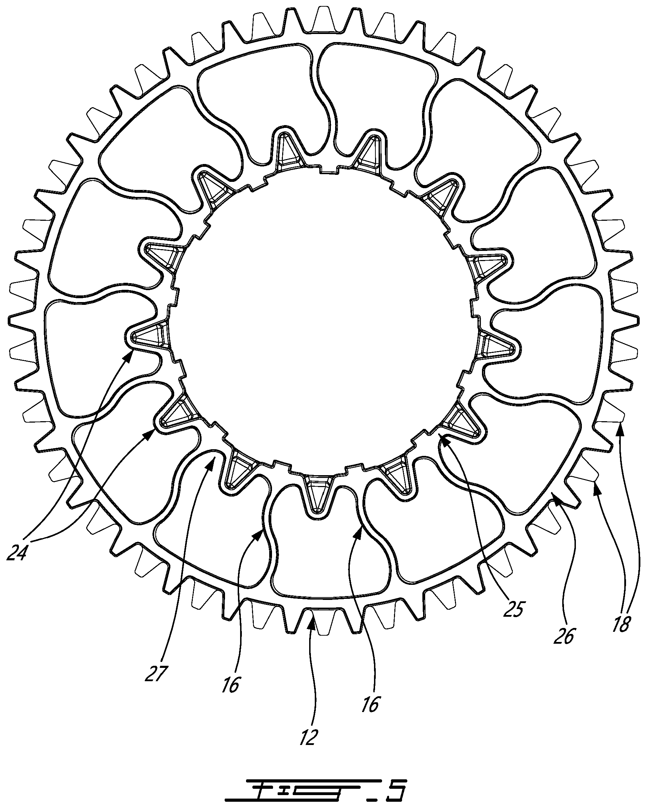

A tire 10 according to an embodiment of an aspect of the present disclosure as best seen for example in FIGs. 3, 4A, 5 is a ring-shaped body comprising an inner wall 25, an outer wall 26, and spokes 16 radially extending between the inner wall 25 and the outer wall 26.

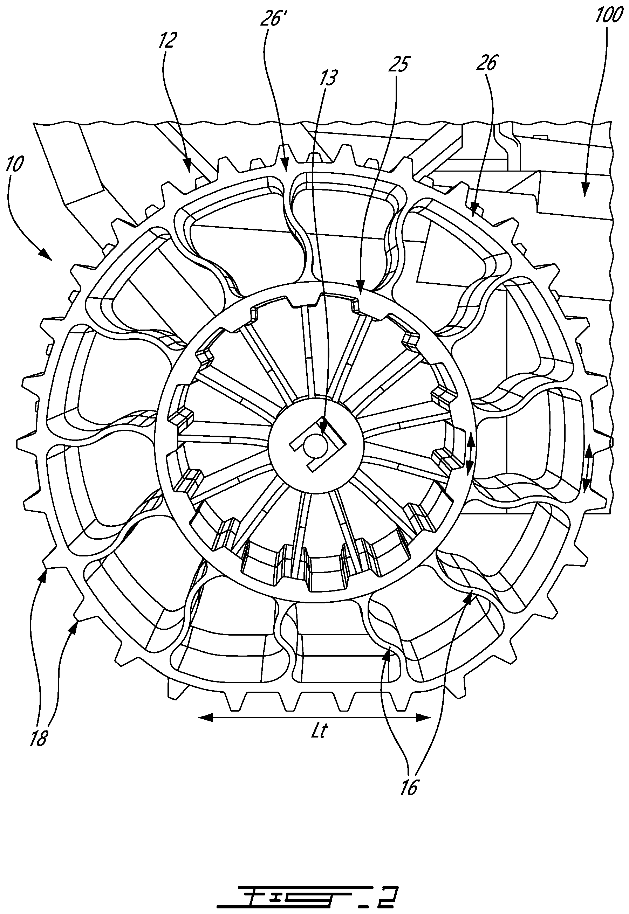

The spokes 16 are of a geometry and a material selected to withstand a pivotal force submitted to the tire transversely to the rotation axle 13 of the wheeled tool, in such a way that they may reversely deform from their original shape in case of impact with an obstacle, and/or under the weight of the tool (see for example spokes 16 at the bottom of the tire in FIGs. 1 and 2). They may be straight, U-shaped, Y-shaped, V-shaped, or S-shaped members for example.

The outer surface 12 of the outer wall 26 of the tire 10, which contacts the ground during use, comprises a tread pattern of studs 18. The studs 18 extend generally transversally across the width of the outer surface 12 of the outer wall 26 and radially outwardly from the outer surface 12 of the outer wall 26 over a length Lw, as shown in FIG. 3 for example, selected for a target thrust surface contact area with the ground surface, for example powdery or granular or slippery such as over sand, gravel, mud, snow and ice, over sloping terrains, or stairs for example, to provide traction during use of the tool.

The tire 10 is mounted on a cylindrical, rigid hub 40 connected to the rotation axle 13 of the wheeled tool.

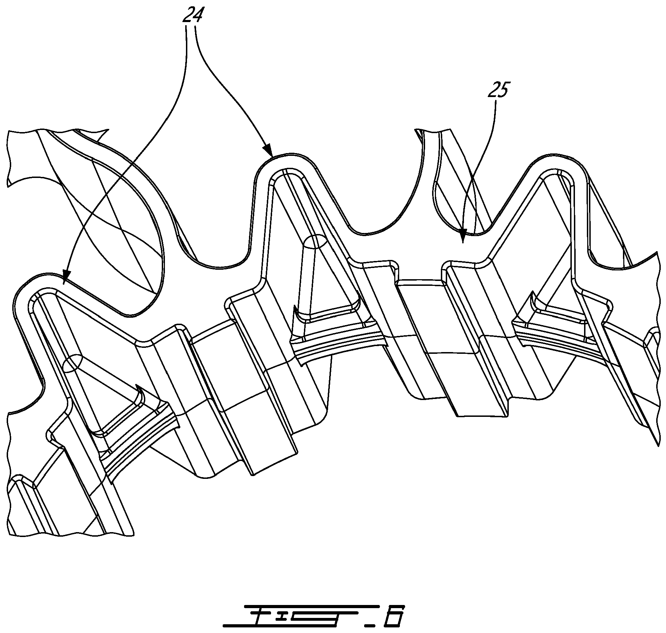

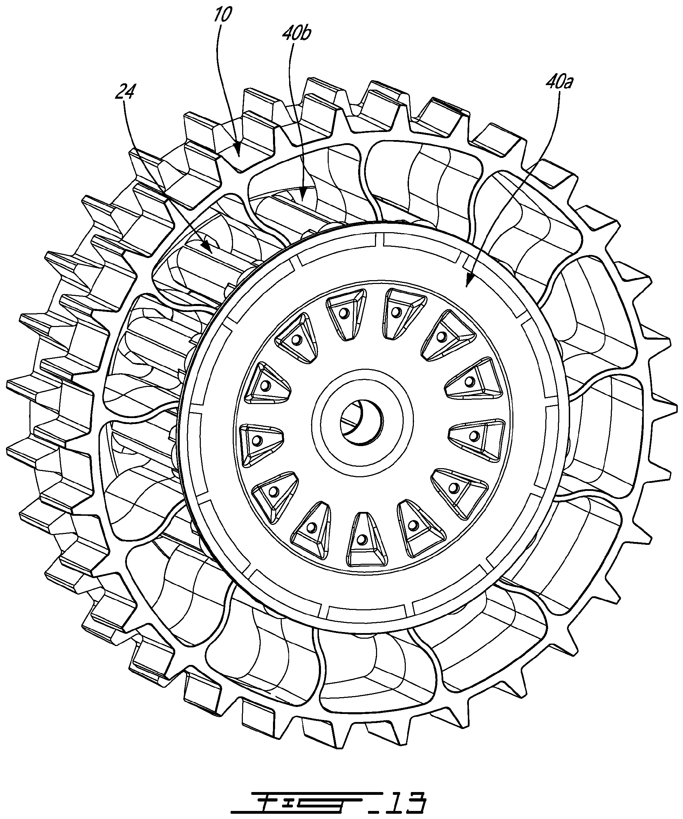

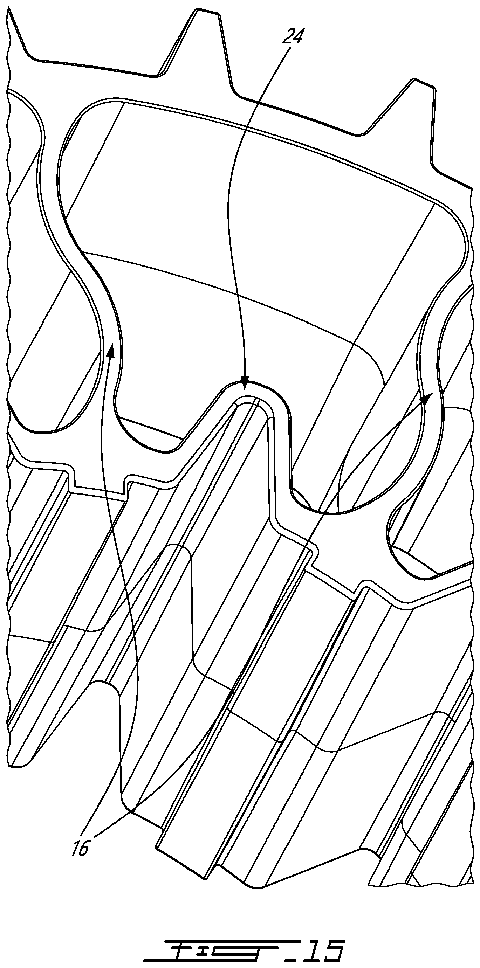

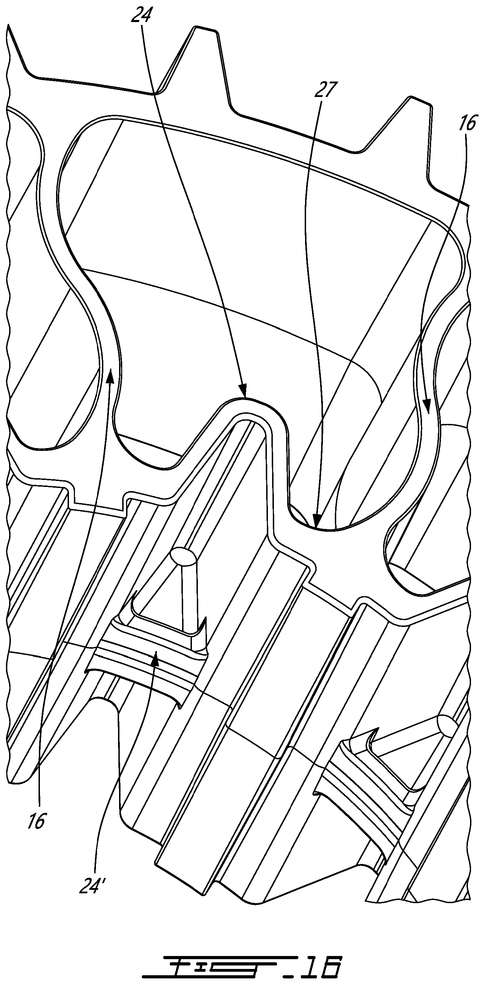

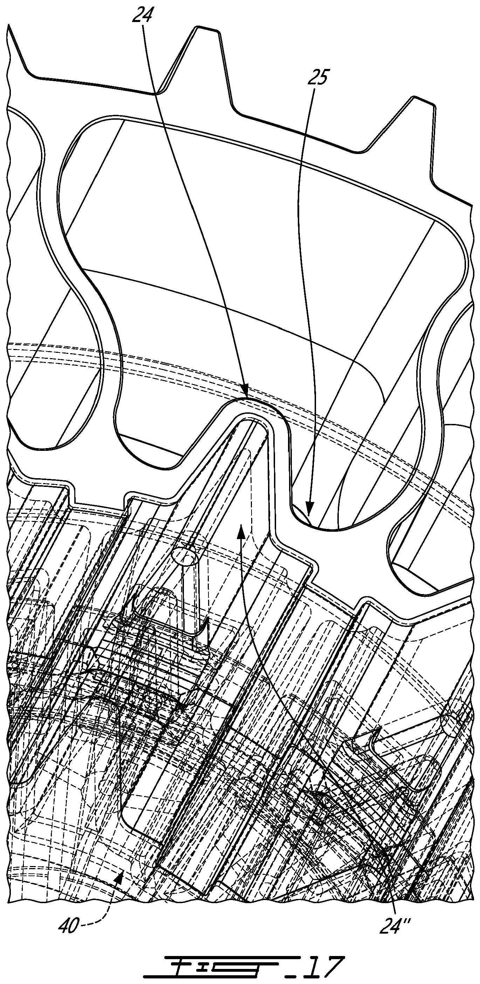

Ribs 24 may be provided, protruding from the outer surface 27 of the inner wall 25 and extending on at least part of the width the outer surface 27 of the inner wall 25 between two successive spokes 16, as shown for example in FIG. 3, FIGs. 5-7 and 15-17. Alternatively, they may be selectively positioned on the outer circumferential surface of the hub 40 extending on at least part of the width the outer circumferential surface of the hub 40, as shown in FIG. 13 for exemple. The ribs are positioned as stoppers against deformation in the center of the tire where force is transmitted between the spokes and the hub, and prevent lateral and vertical sagging of the tire as the wheeled tool is under use, depending on the use conditions, thereby preventing laterally unbalance of the wheeled tool and securing the gripping action of the hub on the tire's inner wall for effective transmission of the rotational force from the axle of the tool through the hub to the tire. The stoppers also limit the sagging of the tire under the weight of the tool when the tool stands unused for an extended period of time, for example during storage. The width of the stoppers may be selected in view of the width of the tire to control lateral stability upon sagging; stoppers extending the full width of the tire as in FIGs. 15-17 for example may be selected to strengthen lateral stability compared to stoppers with a reduced extension across the width of the tire as in FIG. 2 for example. In FIG. 16, the stopper 24 protruding from the outer surface 27 of the inner wall 25 between the two successive spokes 16 comprises a transverse rib 24'; in FIG. 17, the outer surface of the rigid hub 40 comprises ribs 27" in facing opposition with the stoppers 24 protruding from the outer surface 27 of the inner wall 25, as reinforcements for the stopper 24.

A stopper may be provided between each two spokes, on distributed around the perimeter, for example between successive spokes every about 60 degrees or less.

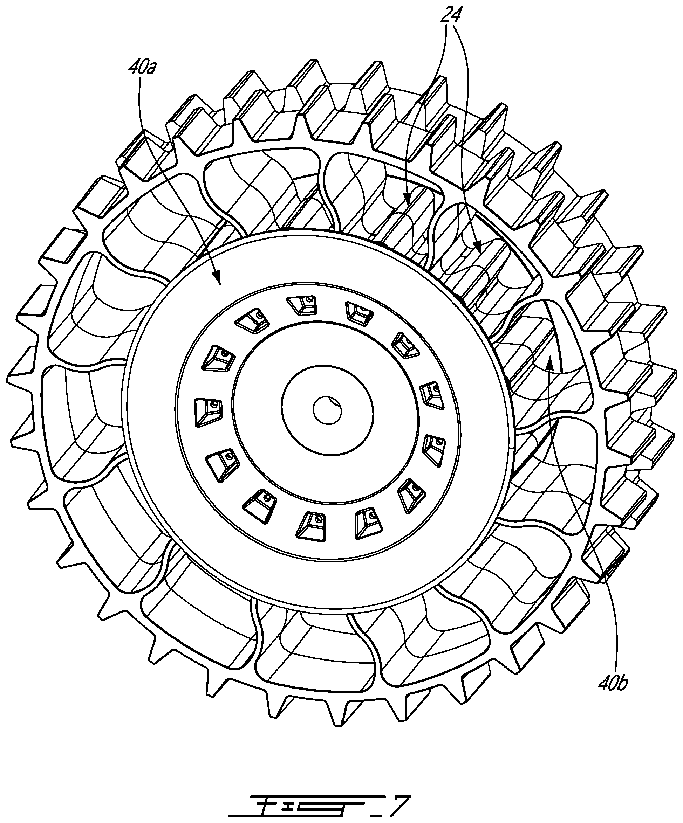

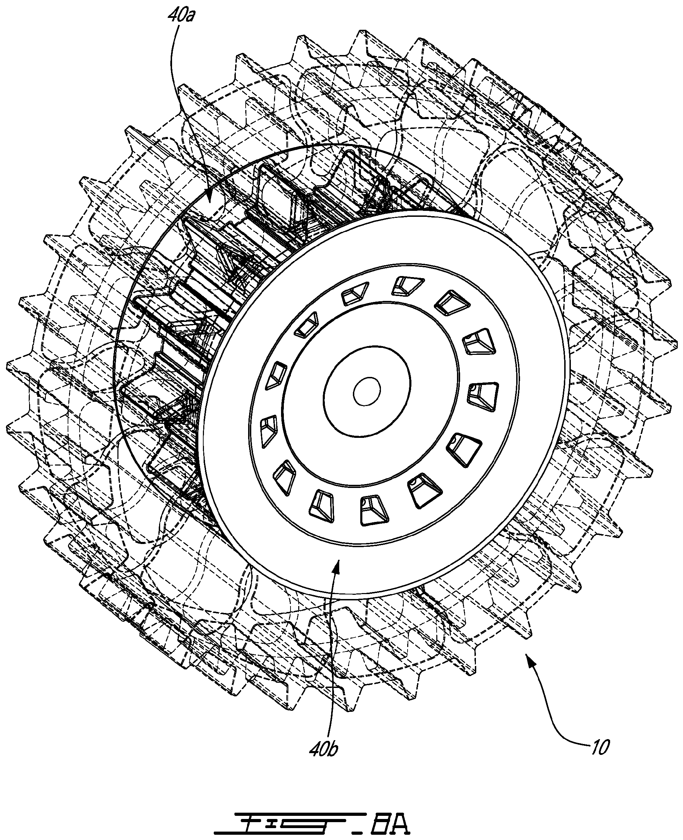

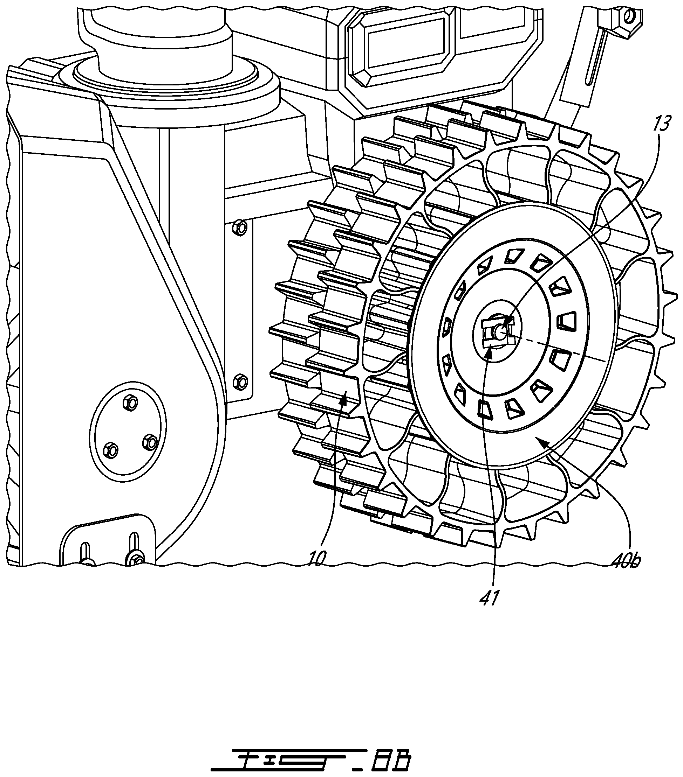

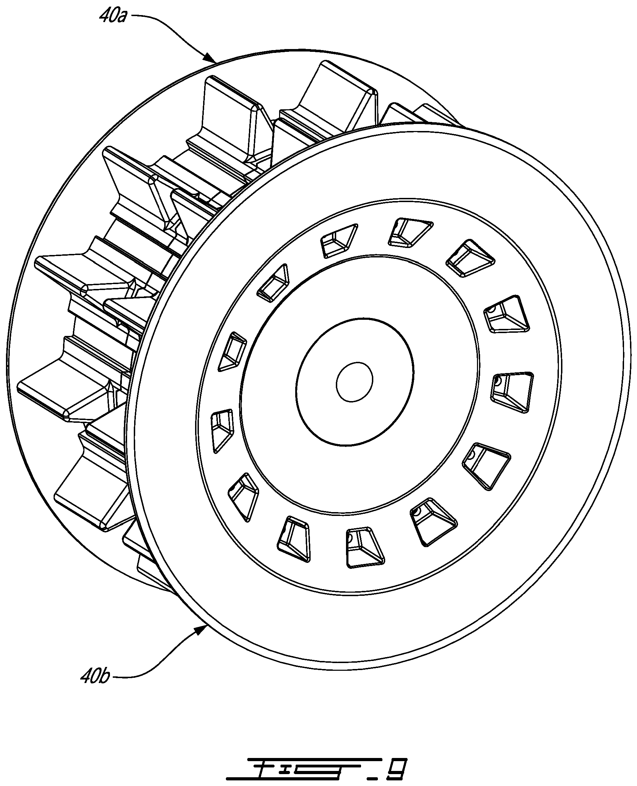

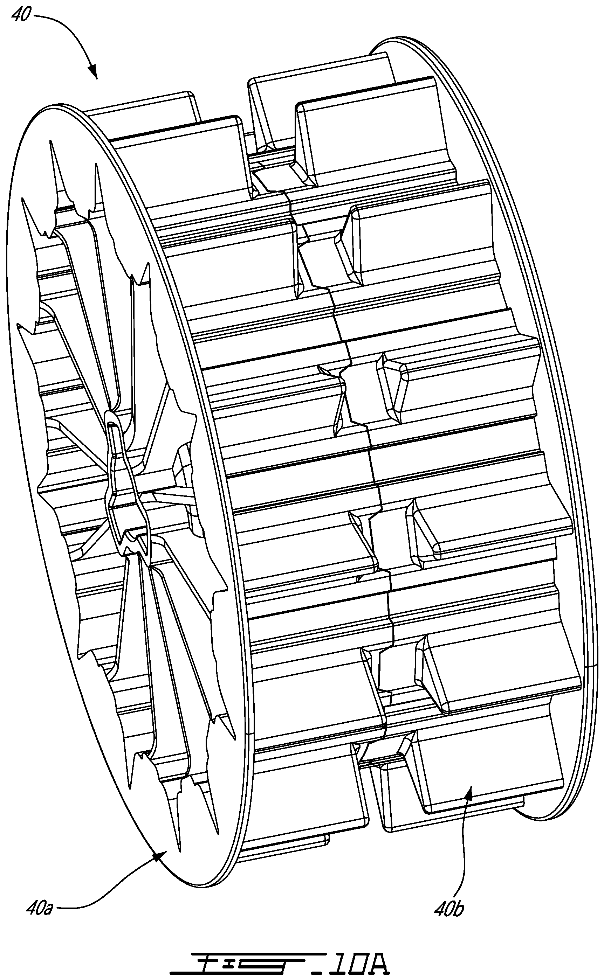

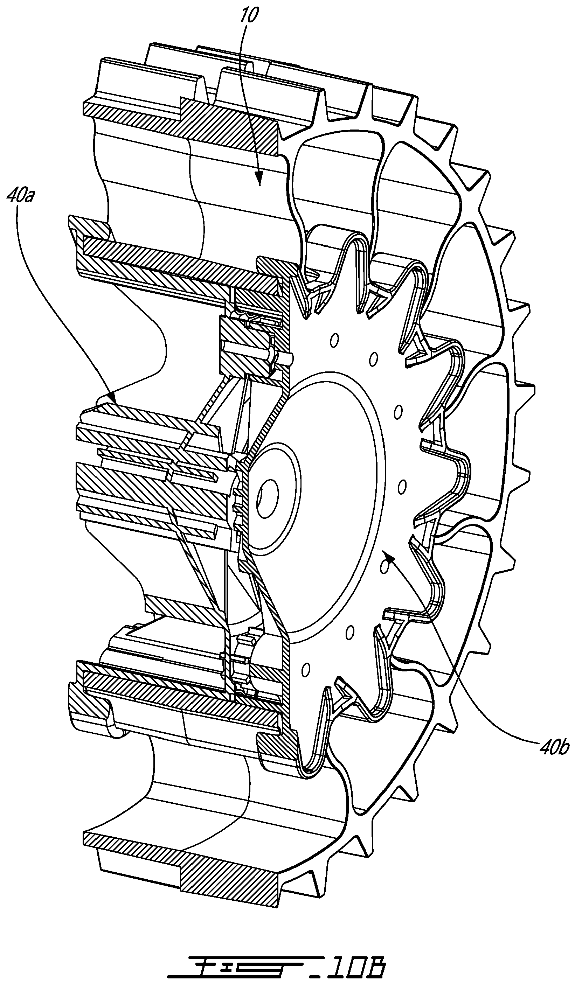

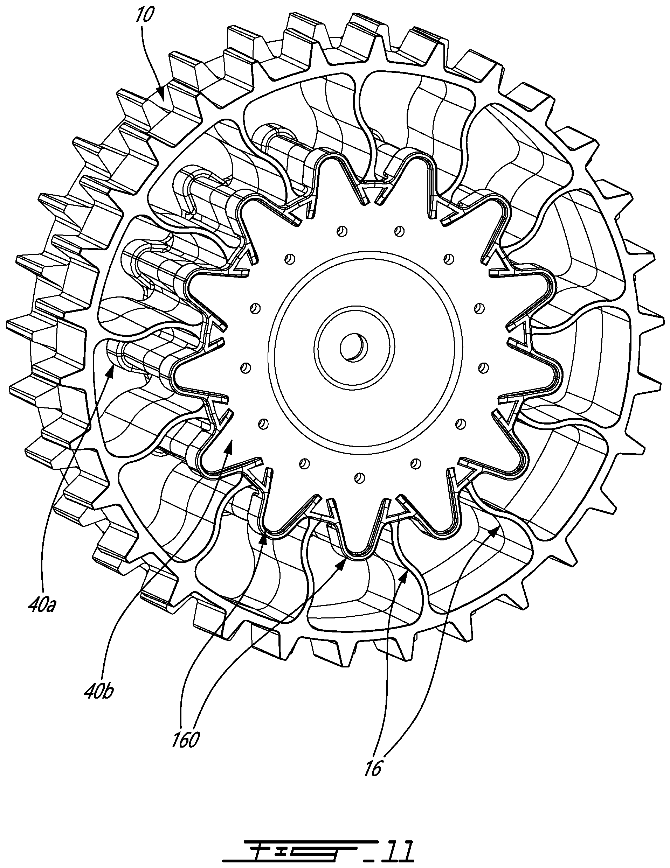

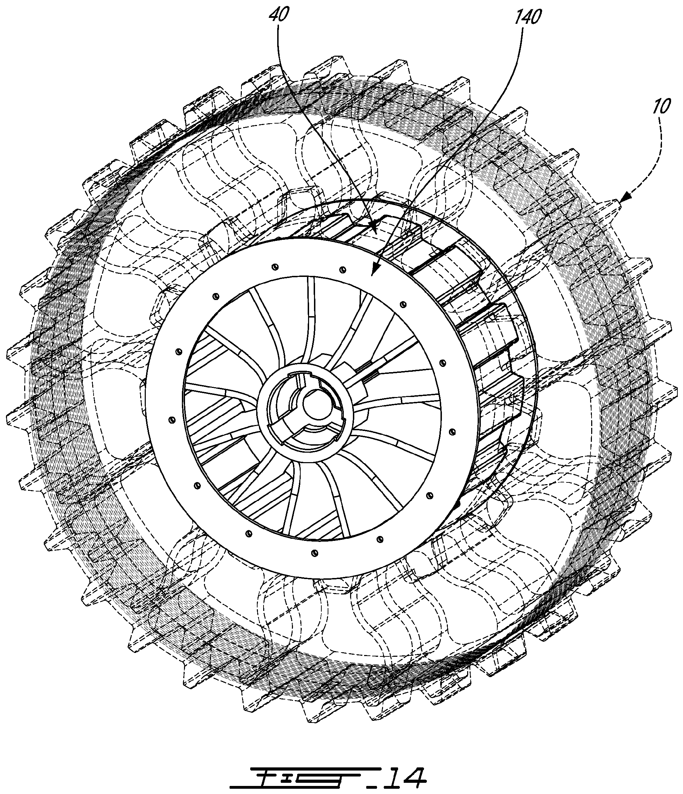

The hub may be made of interlocking hub parts as illustrated for example in FIGs. 9- 11 and 13 for example. In FIGs. 10, hubs parts 40a, 40b have matching surfaces comprising respective male/female elements and/or alternating male/female teeth, of a pitch such that engage from each side of tire, thereby encapsulating the tire into an assembly; the assembly may further be locked using a fastener, such as screws, bolts or rivets for example, thereby locking the tire between the part hubs 40a, 40b, as shown in FIGs. 11 and 13 for example. In an embodiment of an aspect of the present disclosure as shown for example in FIGs. 7-9, when mounted on a tool as in FIG. 8B, the tire in positioned between part hub 40b and part hub 40A (not seen in FIG. 8B), a lock 41 is used to secure the part hubs and tire in position for rotation about the axle 13. In other embodiments, the hub may be a one-piece hub 40, and the tire 10 is locked in position between the hub 40 and a hub cap 14, as illustrated for example in FIG. 14.

The tire is made in an elastic material, selected for its elasticity and its hardness according to structural requirements depending on the geometry of the spokes, the thickness of the walls and the size of the tire, and on the weight, size of the axle and temperature use of the wheeled tool, in such a way to allow reversable flattening of the outer wall upon the ground surface as the outer wall comes into contact with the ground. The weight of the vehicle is thus evenly distributed across a large contact area between the outer wall and the ground, preventing sinking and providing stability on inclines and/or unsteady grounds, as well as maximizing the area of the outer wall gripping the ground surface upon operation, thereby maximizing traction. The tire may be made in a polymer such as rubber, thermoplastic elastomers (TPEs), polyurethane elastomers, silicone elastomers, and shape-memory polymers for example, or steel for example, of a hardness between about 50 Shore A and about 80 Shore A, able to return to its original shape after deformation. Materials of different hardness may be selected for the outer wall, the inner wall, the studs and the spokes, according to the ground conditions and /or temperature range of use and of the weight of the tool to be fitted with the tire, and/or the shape of the spokes for example. Circumferential deforming and flattening on a contact length Lt on the ground is allowed, and the tire recovers its original curvature upon rotation out of contact with the ground.

The rigid hub is made in steel, aluminium, polymer such as Polyamide66 (PA66, Nylon66), Acrylonitrile Butadiene Styrene (ABS), Polypropylene (PP), or High-Density Polyethylene (HDPE), for example.

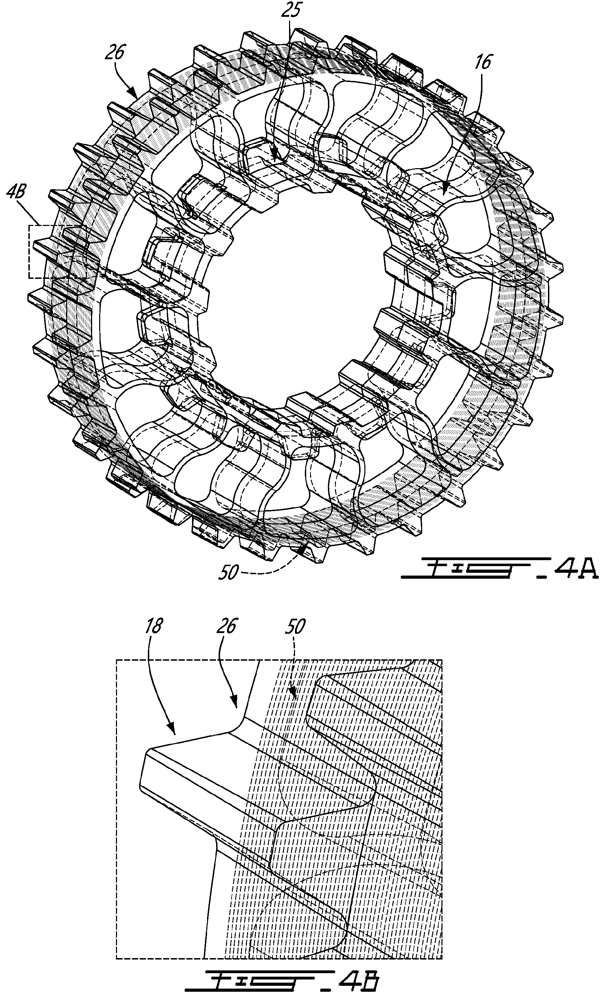

The outer wall of the tire may comprise a spring element, such as a spring coil or wire 50 on the outer wall thereof, as shown in FIGs. 4 for example, and/or a spring steel sheet or a polymer spring sheet (not shown), selected to optimize the return of the tire to its original curvature after deformation, in view of target deformation and recovery based on the weight and / or target use of the tool to be wheeled. Other reinforcement materials and/or geometries may be contemplated, to prevent permanent deformation of the tire when subjected to a load for a long time and/or under the effect of temperature for example.

For example, for tires of a diameter of about 17 inches (43 cm) and width of about 118 mm for a wheeled tool of a weight between about 50 et 170 lbs (between about 68 kg and about 77 kg), depending on typical range of temperature conditions of use, for example as low as about - 20°C and below in case of a snowblower, and as high as about 20°C and above in the case of a lawn mower : the outer wall and the studs may be made in a rubber or a polymer of hardness selected between about 50 Shore A and about 70 Shore A, for example of about 55 shore A in case of the snowblower, and of about 70 shore A in the case of the lawn mower; the outer wall may have a thickness of about 7 mm and may comprise between about 25 à 35 winds of spring steel wire Ø0,9 mm for example; the inner wall and the spokes may be made in a rubber or a polymer of hardness between about 60 shore A and about 80 Shore A for example. FIG. 2 shows S-shaped spokes 16 having a larger radius r, at the connections 25' and 26' with the inner wall 25 and the outer wall 26 respectively, than their thickness, of about 6 mm for example, over the distance between the inner wall 25 and the outer wall 26, of about 80 mm for example. The contact length Lt on the ground is comprised between about 4 inches and about 7 inches (between about 10 cm and about 18 cm) according to the temperature.

The presently disclosed airless, non-pneumatic tire selectively deforms in such a way to increase its contact surface with the ground, thereby providing an increased traction length on the ground and thus an increased contact surface of the tread pattern of the tire with the ground, thus optimizing the thrust on the ground and minimizing slipping upon use of the tool, and reversibly adjusts to the adherence and traction conditions of the ground surface, such as a snowy and/or icy ground and/or uneven ground, in the example of the snow snowblower or a wheeled tool or a tool used during winter time, or muddy and /or uneven and/ or sandy ground surfaces in the example of the land mower or a tool used during summer time, ensuring load support, shock absorption, and traction for safe and efficient maneuver of the tool as it operates on the grounds. The tire provides support and flexibility, efficiently distributing the load evenly and providing a cushioning effect, while maintaining its structure.

The wheeled tool is thus effective on a range of ground surfaces, for climbing steps, and/or in case of curbs, or rough terrains, for example.

The scope of the claims should not be limited by the embodiments set forth in the examples but should be given the broadest interpretation consistent with the description as a whole.

## Claims

1. A tire, comprising an outer wall, an inner wall, and a plurality of spokes between the inner wall and the outer wall; the tire being mounted on a generally cylindrical rigid hub, a plurality of first ribs extending from at least one of : an outer surface of the inner wall on at least part of a width of the outer surface of the inner wall; and on an outer surface of the hub and extending on at least part of a width of the outer surface of the hub.

2. The tire of claim 1, wherein the first ribs extend from the outer surface of the inner wall, and the outer surface of the hub comprises corresponding second ribs.

3. The tire of any one of claims 1 and 2, wherein the hub is made of part hubs connected together with the tire locked in between.

4. The tire of claim 1, wherein the first ribs extend from the outer surface of the inner wall, and the outer surface of the hub comprises corresponding second ribs, the hub being made of part hubs, the tire being locked between the part hubs.

5. The tire of any one of claims 1, and 2, wherein the tire is locked in position between the hub and a hub cap.

6. The tire of claim 1, wherein the first ribs extend from the outer surface of the inner wall, and the outer surface of the hub comprises corresponding second ribs, the hub being made of part hubs, the tire being locked between the part hubs and a cap.

7. The tire of any one of claims 1 to 6, made of an elastic material of a hardness selected between 50 Shore A and 80 Shore A.

8. The tire of any one of claims 1 to 7, wherein the hub is made of at least one of: steel, aluminium, and polymer.

9. The tire of any one of claims 1 to 8, wherein the spokes are S-shaped.

10. The tire of any one of claims 1 to 9, wherein the outer surface of the outer wall comprises a tread pattern of studs.

11. A wheel assembly, comprising a tire in an elastic material and a rigid hub, wherein the tire comprises an outer wall, an inner wall, and a plurality of spokes between the inner wall and the outer wall; a plurality of first ribs extending from at least one of : an outer surface of the inner wall on at least part of a width of the outer surface of the inner wall; and on an outer surface of the hub on at least part of a width of the outer surface of the hub.

12. The wheel assembly of claim 11, wherein the first ribs extend from the outer surface of the inner wall, and the outer surface of the hub comprises corresponding second ribs.

13. The wheel assembly of any one of claims 11 and 12, wherein the outer wall is made in an elastic material of a hardness selected between 50 Shore A and 70 Shore A; the inner wall and the spokes are made in a resilient material of a hardness selected between 60 Shore A and 80 Shore A.

14. A method for making a tire, comprising providing a hub in a rigid material; a ring shape-element in an elastic material comprising an outer wall, an inner wall, and spokes extending between the inner wall and the outer wall; first ribs extending from at least one of : an outer surface of the inner wall on at least part of a width of the outer surface of the inner wall; and on an outer surface of the hub on at least part of a width of the outer surface of the hub; and mounting the tire to the hub.

15. The method of claim 14, wherein the tire has a hardness comprised between 50 Shore A and 80 Shore A.
